# EUROPEAN PATENT APPLICATION

(11) **EP 1 486 663 A2**
(43) Date of publication of application: **15.12.2004**
(21) Application number: 04253527.8
(22) Date of filing: 14.06.2004
(51) Int. Cl.: F02M 37/22

(54) **Liquid separator**

(30) Priority: 13.06.2003 GB 0313756
(71) Applicant: Ross, Geoffrey John, Watford, Herts WD18 7QU (GB); Ross, Linda Ann, Watford, Herts WD18 7QU (GB)
(72) Inventor: Ross, Geoffrey John, Marlow, Buckinghamshire SL7 2ED (GB)
(74) Representative: Naylor, Matthew John

(57) **Abstract**

Disclosed is a liquid separator for separating a heavier fraction from a lighter fraction in a liquid flow of a mixture of the heavier fraction and the lighter fraction. The separator has an inlet region (19), a separation chamber (2) and a flow dispersion member (17). The flow dispersion member is located between the inlet region and the separation chamber. The flow dispersion member has a plurality of flow channels formed through it so as to provide, in use, a plurality of flow paths between the inlet region and the separation chamber.

## Description

This invention relates to liquid separators for separating heavier and lighter fractions in a mixture of liquids. It is particularly, but not exclusively, concerned with the separation of water from a lighter liquid such as diesel fuel.

Water separators are employed in the inlet feed lines of diesel engines because of the ill effects that can be caused by even small amounts of water contamination of the fuel. Known apparatus relies on the difference in densities between the two liquids to achieve separation of any water from the fuel flow, shown for example in GB 1113621 and GB 1234022. In these published specifications, water droplets suspended in the fuel descend to a collecting region at the bottom of a separation chamber of the separator and agglomerate there to form a main body of collected water.

The present inventor has reaslised that there is a problem with such known apparatus. In such apparatus, the main body of water is susceptible to disturbance by the fast flowing liquid entering the separation chamber. This is particularly noticeable in agglomerators (the typical form of separator with which the present invention is mainly concerned) at higher flow rates such as 55 litres hour⁻¹ and above, and especially at flow rates in excess of 150 litres hour⁻¹. The incoming flow forms a localised jet of faster flow that travels towards the collecting region at the bottom of the separation chamber. This jetting effect causes turbulence and regions of localised faster flow in the separation chamber, which at higher flow rates disturb the main body of water, causing that main body to be broken up into smaller droplets that are more difficult to separate from the fuel, and may fail to be separated at all.

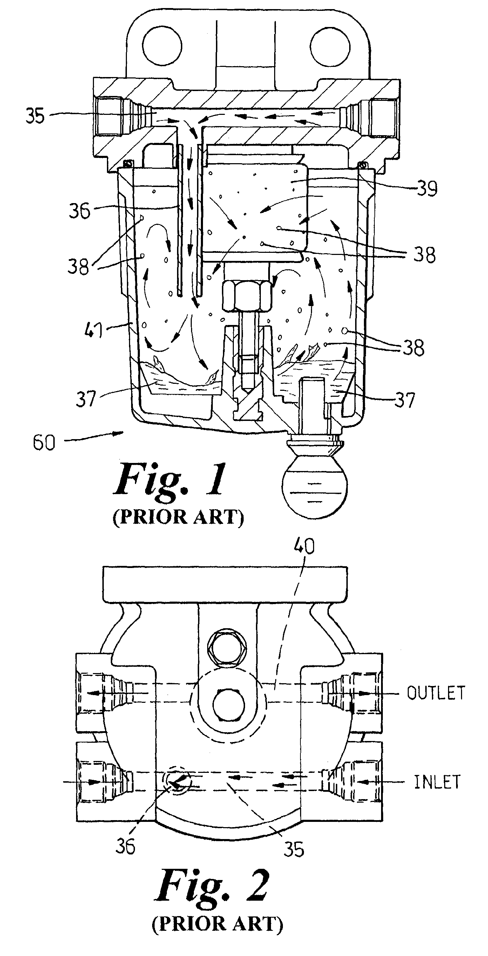

The jetting effect described above is shown in Fig. 1, which shows a vertical section through a known liquid separator 60. Separator 60 has an inlet port 35 and down tube 36, conducting liquid flow into separation chamber 41. The drawing shows disturbance of the collected water 37 in the separation chamber 41 by the incoming fuel jet. Fig. 2 is a horizontal sectional view through the inlet port 35 of the same known liquid separator showing the fuel flow entering the down tube 36. In Figs. 1 and 2, the direction of flow is indicated by the arrows, which indicate the incoming fuel jet and the resulting regions of'localised faster flow in the separation chamber. The collected water 37 is broken up into smaller droplets 38 which can accompany the main fuel flow through the filter element 39 and exit the separator with the fuel via the outlet port 40.

In other known separators, the incoming liquid flow flows via a circumferential, swirling flow path which is established as the incoming fuel is directed around the circumference of separators having a generally circular cross section (see GB 1234022 and EP 0267014).

The present inventor has realized that, particularly at higher liquid flow rates such as 55 litres hour⁻¹ and above, and more particularly at flow rates in excess of 150 litres hour⁻¹, the jetting in known water separators not only causes break up and redispersion of water that has already collected at the separator bottom (as shown in Fig. 1), but also, due to the turbulence and regions of localised faster flow in the separation chamber, impedes the initial separation of water droplets from the fuel. It is thought that this is because agglomeration of the suspended water droplets is retarded if the speed of the flow of the liquid is too fast or if conditions are too turbulent. In such cases, the water is present only as extremely small droplets that can fail to be separated at all from the fuel. Even when these small droplets descend to the collecting region at the bottom of the separation chamber, they may not agglomerate easily with the main body of water that has collected there, probably due to surface tension effects. At these higher flow rates the smaller droplets are likely to be carried out of the separator with the fuel flow.

The present invention has been devised in order to address at least one of the above-described problems.

Accordingly, in a general aspect, the present invention provides a flow dispersion member having a plurality of flow channels formed through it, the flow dispersion member being locatable to provide a plurality of flow paths between an inlet region and a separation chamber of a liquid separator.

The plurality of flow paths between the inlet region and the separation chamber provided by the flow distribution member can serve to disperse the incoming flow, thus reducing turbulence and regions of localised faster flow in the separation chamber, and improving separation.

In a first aspect the invention provides a liquid separator for separating a heavier fraction from a lighter fraction in a liquid flow of a mixture of the heavier fraction and the lighter fraction, the separator having:
an inlet region;
a separation chamber; and
a flow dispersion member;
wherein the flow dispersion member is locatable between the inlet region and the separation chamber, the flow dispersion member having a plurality of flow channels formed through it to provide, in use, a plurality of flow paths between the inlet region and the separation chamber.

In a second aspect the invention provides a flow dispersion member for dispersing the flow of liquid flowing into a separation chamber of a liquid separator, the member having:
an inlet side
a separation chamber side; and
a plurality of flow channels formed through the member to provide, in use, a plurality of flow paths from the inlet side to the separation chamber side.

In a third aspect the invention provides a flow dispersion member according to the second aspect in combination with a liquid separator, the liquid separator having an inlet region and a separation chamber, wherein the flow dispersion member is locatable between the inlet region and the separation chamber.

In a fourth aspect the invention relates to the use of a flow dispersion member according to the second aspect in a liquid separator, the liquid separator having an inlet region and a separation chamber, wherein the flow dispersion member is locatable between the inlet region and the separation chamber.

In a fifth aspect the invention provides a method of separating a heavier fraction from a lighter fraction in a liquid flow of a mixture of the heavier fraction and the lighter fraction by using a liquid separator according to the first aspect, or a flow dispersion member according to the second aspect.

In a sixth aspect the invention provides a method of manufacture of a liquid separator according to the first aspect, or a flow dispersion member according to the second aspect.

Optional features of the invention are set out below. These optional features are applicable to any aspect of the invention, unless otherwise stated, and may be combined with one another.

Preferably, the separator is an agglomerator.

Preferably the sum of the areas of the flow channels is at least 2% of the total area of the flow dispersion member presented, in use, to the inlet side of the separator. The sum of the areas of the flow channels is, in use, the same as the total flow area through the flow dispersion member when the flow dispersion member is present, i.e. it is the total flow area measured in the plane perpendicular to the overall flow direction of the liquid flow. The area of the flow dispersion member of interest here can be thought of as the total flow area in the separator without the flow dispersion member being present, measured at the space which the flow dispersion member would occupy, if it were present.

If the sum of the areas of the flow channels is 2% of the total area of the flow dispersion member presented to the inlet side of the separator, the ratio between the two areas is 1:50. More preferably this ratio is at least 1:45 (2.2%), at least 1:30 (3.3%), at least 1:25 (4%), at least 1:20 (5%), or at least 1:16 (6.3%). Typically, the ratio is not more than 1:4 (25%), but preferably the ratio is not more than 1:5 (20%), not more than 1:6 (17%), not more than 1:7 (14%) or not more than 1:8 (13%). The importance of these ranges is that they can allow the flow dispersion member more significantly to reduce the aforementioned problems and to improve separation of the heavier fraction from the lighter fraction with respect to separation using known separators. In particular, the ratio should not be too small, otherwise the flow rate through the separator will not be high enough without causing undesirable jetting from the flow channels. On the other hand, if the ratio is too large, the flow rate though each flow channel may be unequal. This can lead to undesirable non-uniform flow in the separation chamber.

The total area of the flow dispersion member presented, in use, to the inlet region is inclusive of the areas of the flow channels, but it excludes any part of the surface which is not, in use, exposed to the inlet region. Therefore, the area of the surfaces of the flow dispersion member which are presented, in use, to the separation chamber, to an outlet region or to any other part of the liquid separator apart from the inlet region are not included in the area referred to.

The total area of the flow dispersion member presented, in use, to the inlet side of the separator is the same as the total area of the flow dispersion member that is "seen", in use, by the liquid in the inlet region.

It is preferred that the liquid flow of the mixture of the heavier fraction and the lighter fraction has a flow rate of at least 55 litres hour⁻¹. More preferably, the liquid flow has a flow rate of at least 60, 70, 80, 90 or 100 litres hour⁻¹. The flow rate can be even higher, for example up to 150, 160, 170, 180, 190, 200 or 210 litres hour⁻¹ or higher. It is most preferred that the liquid flow has a flow rate of at least 195 litres hour⁻¹. At such flow rates, the invention can improve separation of the heavier fraction from the lighter fraction with respect to separation using known separators at these higher flow rates.

Preferably, the liquid flow has an average flow rate density at an inlet of the liquid separator of at least 80 litres hour⁻¹ cm⁻². More preferably the liquid flow has an average flow rate density at the inlet of at least 90, 100, 110, 120, 130, 140, 150, 160, or 170 litres hour⁻¹ cm⁻². It is most preferred that the liquid flow has an average flow rate density at the inlet of at least 170 litres hour⁻¹ cm⁻². At flow rate densities above these preferred minimum flow rate densities at the inlet, the jet of incoming flow can be fast enough to cause significant problems in known separators, due to the creation of regions of localised faster flow. Therefore, it is above these preferred minimum flow rate densities at the inlet that the invention can most significantly improves separation of the heavier fraction from the lighter fraction with respect to separation using known separators.

Typically, the flow rate of the liquid flow divided by the total internal volume of the liquid separator is at least 100 hour⁻¹. This gives a preferred volume replenishment rate of liquid through the separator. More preferably this value is at least 125, 150, 175, 200, 225, 250, 275, 300, 325, 350, 375 or 400 hour⁻¹. It is most preferred that this value is at least 400 hour⁻¹. The total internal volume of the liquid separator is the total volume of the internal flow space. These values reflect the mean flow rate per unit volume within the separator (their reciprocals being the mean residence time of flow at any point within the separator). It is above these preferred minimum values that the flow is fast enough to most significantly cause the problems described above in known separators. Therefore, it is above these preferred minimum values that the invention most significantly improves separation of the heavier fraction from the lighter fraction with respect to separation using known separators.

Typically, the internal volume (capacity) of the separator is less than 1 litre, more typically less than 0.5 litres.

Preferably the flow channels are spaced apart from each other at regular intervals in the flow dispersion member. In such configurations the liquid flow in the inlet region becomes more evenly dispersed upon passage through the flow channels and into the separation chamber, thus further reducing turbulence and regions of localised faster flow therein thus further improving separation.

Preferably the flow channels are of circular sectional shape. Channels of such shape can be relatively easy to form than channels of complex shape.

The flow channels may have a tapering shape, narrowing in the flow direction, so that in use heavier fraction liquid is encouraged through the flow channels. At least one of the flow channels may have an associated sloped region of the surface of the member adjacent the inlet side opening of the flow channel for this reason. In this configuration, heavier fraction droplets that have become separated in the inlet region, for example due to a centrifugal force created by a swirling flow therein, and that have agglomerated to a certain extent and collected on the flow dispersion member, are encouraged through the flow channels by their weight in relation to the lighter fraction. However, some preferred embodiments do not have this feature, since manufacture of the flow dispersion member without this feature can be significantly easier.

Preferably, the remainder of the inlet side of the flow dispersion member is substantially flat. This can prevent the flow dispersion member from interfering in an undesirable way with the flow of the liquid in the inlet region.

Preferably the flow distribution member has at least four flow channels. More preferably the flow distribution member has at least six flow channels. Even more preferably the flow distribution member has eight channels. It is preferred that these channels are spaced apart from each other at regular intervals, e.g. equidistant from the center of the flow dispersion member. They may, for example, be circular apertures.

Preferably the flow dispersion member has at least one outlet channel formed through it, communicating with an outlet of the liquid separator. More preferably each outlet channel is formed inwardly of said flow channels. In the case where the flow dispersion member is of disc-like shape, the outlet channel is preferably formed radially inwardly of the (inlet) flow channels.

Preferably the flow dispersion member has a single outlet channel. This allows the flow dispersion member to be formed more easily than where there are multiple outlet channels. More preferably, the single outlet channel is circular, and is formed through the center of the flow distribution member. In this configuration it is preferable that the flow dispersion member has an innermost rim surrounding the single outlet aperture. The innermost rim may be coplanar with the flow dispersion member but evenly displaced in a direction normal to the plane of the flow dispersion member by an inner flange. This may allow, in use, the innermost rim to be directed further towards the separation chamber. It is also preferred that the outermost edge of the flow dispersion member is provided with an outer flange so that, in use, the outer flange is directed towards the separation chamber.

Alternatively the flow dispersion member may have a plurality of outlet channels. Preferably these are a plurality of outlet apertures surrounding a further, central aperture adapted to receive a bolt therethrough upon location of the flow dispersion member between the inlet region and the separation chamber. For this alternative it is preferable that the flow dispersion member has centrally on one surface thereof a shallow circular recess, wherein the outlet apertures and the central aperture are within said recess.

Preferably the flow dispersion member is made of mild steel. The flow dispersion member may, for example, be pressed or stamped from steel plate (typical thickness of less than 1 mm, e.g. about 0.5 mm).

Embodiments of the invention will be described in more detail, by way of example, with reference to the accompanying drawings, in which:
Fig. 1 is a vertical section view of a known liquid separator including the inlet, showing disturbance of the collected heavier fraction.
Fig. 2 is a horizontal section view through the inlet port of the known liquid separator of Fig. 1 showing the incoming fuel flow.
Fig. 3 is a vertical section view of a liquid separator according to an embodiment of the invention with a flow distribution member fitted, showing the inlet ports of the separator. The upper portion of this view is not coplanar with the lower portion.
Fig. 4 is a horizontal section view of the inlet region of a a liquid separator according to an embodiment of the invention.
Fig. 5 is a vertical section view of a liquid separator according to an embodiment of the invention with a flow distribution member fitted, showing the outlet ports. The upper portion of this view is coplanar with the lower portion.
Fig. 6 is a vertical section view of a liquid separator according to an embodiment of the invention with flow distribution member fitted and including the inlet ports, showing separation of a heavier fraction.
Fig. 7 is a horizontal section view of the inlet region of a a liquid separator according to an embodiment of the invention, indicating the path of the incoming liquid flow.
Fig. 8 is a horizontal section view of a first embodiment of the flow distribution member.
Fig. 9 is a vertical section view of the first flow distribution member of Fig. 8.
Fig. 10 is a horizontal section view of a second embodiment of the flow distribution member.
Fig. 11 is a vertical section view of the flow distribution member of Fig. 10.

The known liquid separator illustrated in Figs. 1 and 2 has been described already.

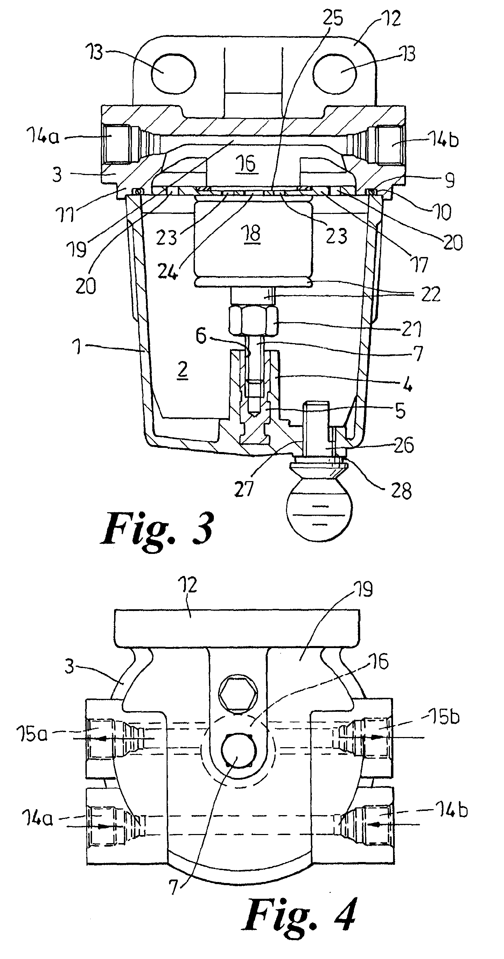

The liquid separator illustrated in Fig. 3, intended for the separation of water that may be present in a flow of diesel fuel, comprises a pot-like container body 1 providing a separation chamber 2 generally of circular cross-section and closed by a top plate 3. A central vertical stem 4 rising from the bottom of the body interior has fitted therein a sleeve 5 which contains a bore 6 in its upper end. The sleeve 5 is a threaded insert which is moulded into the separation chamber to allow the bolt 7 to be screwed in. The insert is engaged by bolt 7 the head 8 of which rests on the top plate 3 so that the plate is clamped firmly on the body 1 with a sealing ring 9 in a peripheral recess 10 adjacent its bottom flange 11 pressed against the top rim of the body. The top plate has an integral rear mounting flange 12 having apertures 13 to bolt the liquid separator to a bulkhead.

The top plate has alternative inlet ports 14a and 14b on opposite sides, and similarly alternative outlet ports 15a and 15b so that flow through the separator can be from left to right or vice versa, the unused ports being blanked off. Both outlet ports communicate with the interior of a tubular outlet conduit 16 that depends downwards from the top plate, its lower end abutting the upper surface of a disc-shaped flow dispersion member 17 forming a seal therewith via a neoprene seal. Each pair of alternative ports 14a, 14b and 15a, 15b has an axis at a different offset from the central vertical axis of the container.

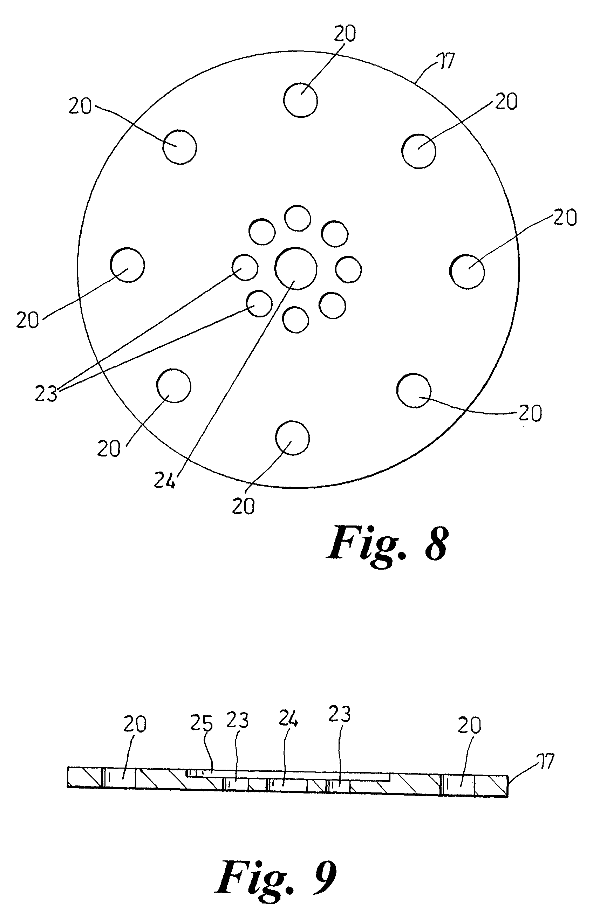

The inlet ports 14a and 14b communicate with the interior of an inlet region 19, which is situated directly above the flow dispersion member 17 and is of generally circular horizontal cross section, extending around the outlet conduit 16 and the outlet ports 15a and 15b. The inlet ports are offset from the vertical line of the outlet conduit 16 so that their axes pass to one side of the outlet conduit. In this way the flow coming into the inlet region adopts a circulatory or swirl motion (shown in Fig. 7) around the outlet conduit as it descends the inlet region towards the flow dispersion member 17.

The flow dispersion member 17 is clamped in place between the lower end of the tubular outlet conduit 16 and the upper end of a replaceable filter element 18. Again, a neoprene seal is employed. The filter element 18 is mounted within the separation chamber on the bolt 7 and secured firmly against the lower surface of the flow dispersion member, forming a seal thereto, using a nut 21, and washers 22, which are mounted beneath the filter element on the bolt 7. Filter element 18 locates onto the flow dispersion member 17 also via a neoprene seal. The flow dispersion member has eight circular flow channels 20 spaced apart at regular intervals, and equidistant from the center of the flow dispersion member. These form eight flow paths between the inlet region and the separation chamber. Inward of the flow channels 20, the flow dispersion member 17 has eight circular outlet apertures 23 surrounding a further, central aperture 24 through which the bolt 7 is received, which bolt assists correct orientation of the flow dispersion member. The outlet apertures form eight flow paths between inside of the filter element 18 and the tubular outlet conduit 16. The flow dispersion member has centrally on the upper surface thereof a shallow circular recess 25, having a diameter large enough for the recess to receive the lower ends of the tubular outlet conduit 16 which form a seal therewith, the seal separating the inlet region 19 from the outlet conduit 16. The outlet apertures 23 and the central aperture 24 are within the recessed area sealed, so that in use, flow is not communicable between the inlet region 19 and the outlet conduit 16 other than via the separation chamber 20 and filter element 18.

The filter element 18 is of generally conventional form, and in use fuel oil is drawn radially inwardly through the filter from the separation chamber, and then upward through the outlet apertures 23, into the outlet conduit 16, and then out of the liquid separator through either one or both of the outlet ports 15a and 15b.

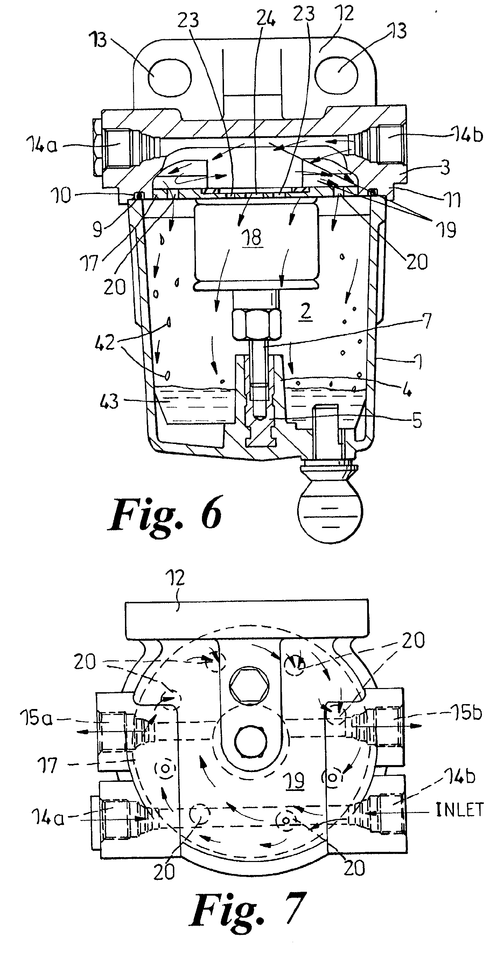

As shown in Fig. 7 the flow entering the inlet region 19 from one of the inlet ports adopts a circulatory or swirl motion around the outlet conduit as it descends the inlet region towards the flow dispersion member 17. In this circulating flow, water droplets in the lighter fuel oil tend to be separated by centrifugal action, generally as described in GB 1234022. In the absence of a flow dispersion member, such separated water droplets might agglomerate and collect at the bottom of the separation chamber 2. However, this action is limited, especially so at high fuel flow rates, by the turbulence and regions of localised high flow in the separation chamber caused by the fast jet of incoming fuel that is directed towards the bottom of the separation chamber. This causes break-up and redispersion of the collected water, and also retards the agglomeration and separation process itself. Thus in the absence of a flow dispersion member smaller droplets more frequently exit the separation chamber via the filter element and remain unseparated in the main fuel flow. To reduce this problem, the eight circular flow channels 20, being spaced apart at regular intervals and equidistant from the center of the flow dispersion member 17, serve to more evenly distribute fuel flow in the separation chamber by diverting the fast swirling incoming fuel flow through eight different flow paths into the separation chamber. Thus, even at very high flow rates, e.g. in excess of 190, 195, 200 or even 210 litres hour⁻¹, water droplets agglomerate and, as shown in Fig. 6, the agglomerated water droplets 42 collect to form a main body of water 43 in the bottom of the separation chamber.

Moreover, the flow dispersion member 17 serves to isolate the swirling motion of the incoming fuel jet in the inlet region, thus preserving the beneficial effect of centrifugal separation of water droplets in this region. These separated droplets collect on the upper surface of the flow dispersion member 17 and are carried through the flow channels 20 and into the separation chamber 2, wherein the flow is dissipated (as indicated by the arrows in Fig. 6), allowing agglomeration and collection at the bottom of the separation chamber. In another embodiment the flow dispersion member is tapered towards the flow channels so that water droplets collected on the flow dispersion member are encouraged through the flow channels and into the separation chamber.

The water that has settled in the bottom of the separation chamber may be removed from time to time by slackening a release member 26 held in a bore 27 in the bottom of the container body 1 so as to loosen a sealing member 28 it bears against, thereby to allow the water to exit through the bore and from there out of the chamber past the freed sealing member 28.

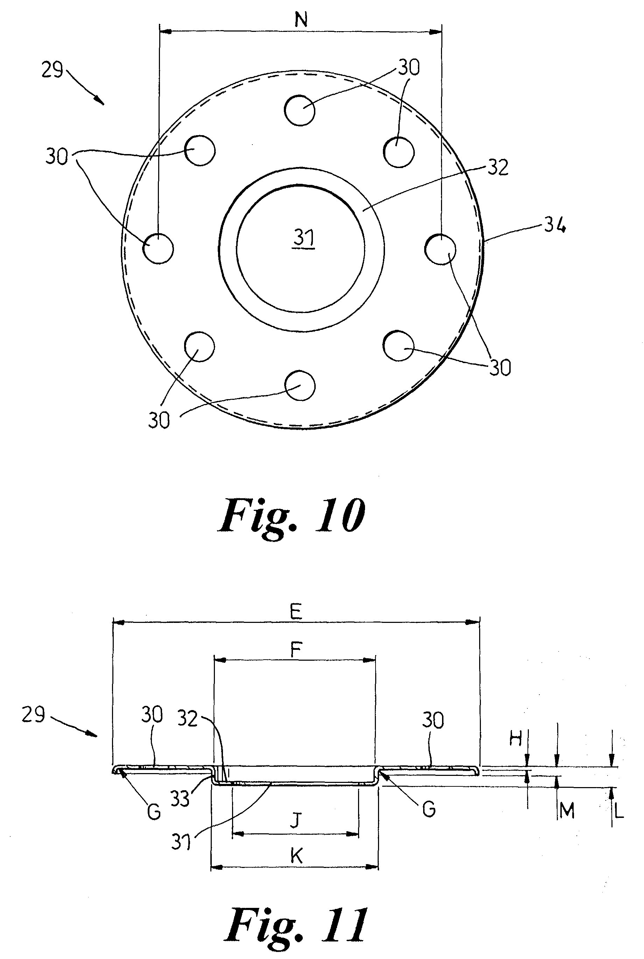

Figs. 10 and 11 show a horizontal and vertical section view respectively through another, second embodiment flow distribution member 29, which can be used in conjunction with the liquid separator described above, in place of the first embodiment flow distribution member 17.

The flow dispersion member 29 is a circular plate having eight circular flow channels 30 spaced apart at regular intervals, and equidistant from the center of the flow dispersion member. Inward of the flow channels 30, the flow dispersion member has, centrally, a single circular outlet aperture 31.

When used in conjunction with the liquid separator embodiment described above, the flow channels 30 form eight flow paths between the inlet region and the separation chamber, and the outlet aperture 31 forms a single flow path, around the bolt 7, between inside of the filter element 18 and the tubular outlet conduit 16. The outlet aperture receives the bolt 7 through its middle, leaving space around the bolt for the single flow path.

The flow dispersion member 29 has an innermost rim 32 surrounding the outlet aperture 31, wherein the innermost rim is coplanar with the flow dispersion member 29 but evenly displaced in a direction normal to the plane of the flow dispersion member by an inner flange 33, so that in use the innermost rim is directed further towards the separation chamber 2. Furthermore, the outermost edge of the flow dispersion member is provided with an outer flange 34 so that, in use, the outer flange is directed towards the separation chamber 2. The innermost rime and the outer flange a re disposed below the level of the rest of the flow dispersion member when it is mounted in the liquid separator.

The innermost rim is adapted to receive, in use, the lower ends of the tubular outlet conduit 16 thereby forming a metal-to-metal seal, the seal separating the inlet region 19 from the outlet conduit 16. The outlet aperture 31 is completely within the area sealed, so that in use, flow is not communicable between the inlet region 19 and the outlet conduit 16 other than via the separation chamber 20 and filter element 18.

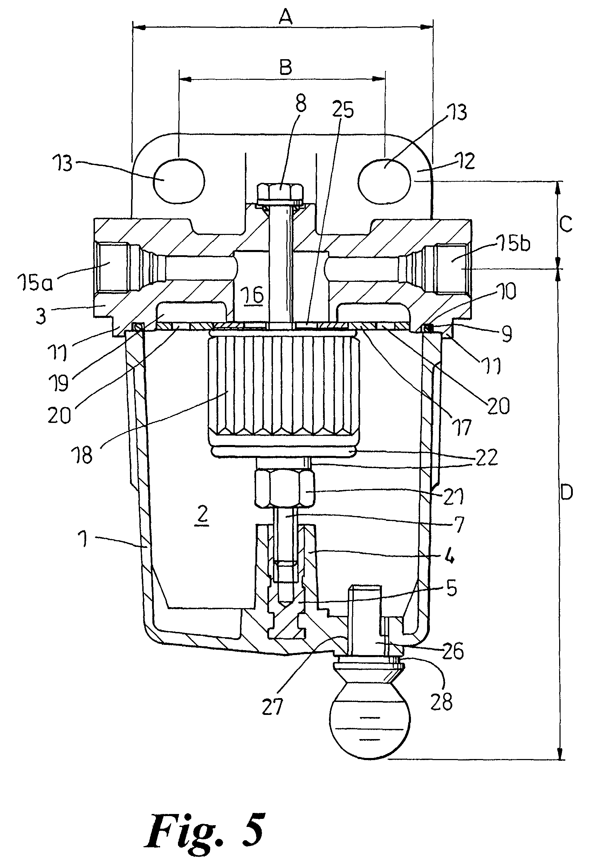

In Fig. 5, the labelled dimensions are:
A = 76 mm
B = 52 mm
C = 22 mm
D = 127 mm

In Fig. 10, the labelled dimensions are:
N (diameter) = 50 mm

Each hole 30 has a dimeter of 5 mm and are angularly spaced at 45° from each other.

In Fig. 11, the labelled dimensions are:
E (diameter) = 64.0 mm
F (diameter) = 28.5 mm
G (radius of curvature) = 0.5 mm
H (thickness) = 0.5 mm
J (diameter) = 22.5 mm
K (diameter) = 29.5 mm
L (thickness) = 3.5 mm
M (thickness) = 2 mm

By way of explanation, the terms "upper" and "lower", etc. have been used in the foregoing description. However, it will be apparatent to the skilled person that the separator and its components could be arranged in other orientations. For example, if the separator is for separation of a less dense component from a more dense component, then the separator could be arranged upside down to the orientation illustrated so that the less dense component floats upwardly to agglomerate in the separation chamber.

The above embodiments have been described by way of example. Modifications of these embodiments, further embodiments and modification thereof will be apparent to the skilled person in the light of this disclosure and so are also within the scope of the invention.

## Claims

1. A liquid separator for separating a heavier fraction from a lighter fraction in a liquid flow of a mixture of the heavier fraction and the lighter fraction, the separator having:
an inlet region;
a separation chamber; and
a flow dispersion member;
wherein the flow dispersion member is locatable between the inlet region and the separation chamber, the flow dispersion member having a plurality of flow channels formed through it to provide, in use, a plurality of flow paths between the inlet region and the separation chamber.

2. A liquid separator according to claim 1 wherein the sum of the areas of the flow channels is at least 2% of the total area of the flow dispersion member presented, in use, to the inlet side of the separator.

3. A liquid separator according to claim 1 or claim 2 suitable or adapted for use with a flow rate of said liquid flow giving a volume replenishment rate in said separator of at least 100 hour⁻¹.

4. A liquid separator according to any one the preceding claims wherein the flow channels are spaced apart from each other at regular intervals in the flow dispersion member.

5. A liquid separator according to any one the preceding claims wherein the flow channels are of circular sectional shape.

6. A liquid separator according to any one of the preceding claims wherein the flow channels have a tapering shape, narrowing in the direction of flow, so that, in use, heavier fraction liquid is encouraged to flow through the flow channels.

7. A liquid separator according to any one of the preceding claims wherein the flow dispersion member has at least one outlet channel formed through it, communicating with an outlet region of the liquid separator.

8. A liquid separator according to claim 7 wherein the at least one outlet channel is formed inwardly of said flow channels.

9. A flow dispersion member for dispersing the flow of liquid flowing into a separation chamber of a liquid separator, the member having:
an inlet side
a separation chamber side; and
a plurality of flow channels formed through the member to provide, in use, a plurality of flow paths from the inlet side to the separation chamber side.

10. A method of separating a heavier fraction from a lighter fraction in a liquid flow of a mixture of the heavier fraction and the lighter fraction by using a liquid separator according to any one of claims 1 to 8, or a flow dispersion member according to claim 9.
